# EUROPEAN PATENT SPECIFICATION

(11) **EP 2 666 348 B1**
(45) Date of publication and mention of the grant of the patent: **04.07.2018**
(21) Application number: 13167165.3
(22) Date of filing: 09.05.2013
(51) Int. Cl.: A01D 43/10, A01D 82/02

(54) **Cracker roller disc**
Brechwalzenscheibe
Disque à rouleaux de craqueur

(30) Priority: 24.05.2012 GB 201209117
(43) Date of publication of application: 27.11.2013
(73) Proprietor: AGCO International GmbH, 8212 Neuhausen am Rheinfall (CH)
(72) Inventor: Burkart, Franz, 87499 Wildpoldsried (DE)
(74) Representative: AGCO Intellectual Property Department

(56) References cited:
- EP-A2- 2 422 881
- DE-A1- 4 122 338
- DE-A1- 10 151 246
- US-A- 2 713 277
- US-A- 5 181 375
- US-A1- 2007 221 006

## Description

This invention relates to a cracker roller assembly on a forage harvester or similar agricultural harvesting machine and, more specifically, to discs for use in such an assembly, to a method for the manufacture of such discs, and to discs produced by the method.

Forage harvesters are used to harvest different kinds of crops which may require different harvesting processes. If, for example, grass is harvested the forage harvester cuts the grass from the field, compresses the grass in the compression rollers before chopping the harvested material into smaller parts in a chopper drum. The chopped grass is then discharged by a blower via a spout into an accompanying trailer. If, for example, a kernel crop such as maize, is harvested the harvesting process requires an additional step to crack the closed skin of the kernels, therefore, a cracker unit is provided between the chopper drum and the blower to crush each kernel.

Cracker units typically comprise two longitudinal cracker rollers which are arranged with a roller gap (longitudinal space) between them through which harvested crop is fed. As shown in International Patent Application WO 2012/010396 (commonly assigned with the present application) the cracker rollers may be formed by an arrangement of multiple cracker roller discs mounted on a common shaft. Another example is the disc cracker offered by Maschinenfabrik Bernard Krone GmbH (illustrated at http://landmaschinen.krone.de/index.php?id=2548&L=1). Such a multi-disc arrangement has a number of advantages compared to a unitary roller in terms of manufacturing and maintenance costs. For example, foreign object damage occasioned by a solid object passing through the roller gap may be remedied by the replacement of just a few of the discs rather than a complete, and much more expensive, roller.

Each disc typically has an arrangement of radial cutting surfaces across each face to assist in breaking up the material. With a large number (between 20 and 40) of discs in a typical cracker roller assembly, an efficient method of manufacture is clearly desirable. One current technique involves casting the individual discs followed by individual dressing of the cutting surfaces. An alternative technique comprises lathe turning of a blank of material to generate a disc shape and then milling the surface of the blank to cut in the individual cutting edges. Such techniques are relatively slow as the individual cutting surfaces are addressed one at a time in a lengthy sequence of operations which increases with the number of cutting surfaces on the disc. An example of a prior art cracker roller disc can be found in German patent application publication DE 101 51 246 A1.

An object of the present invention is to provide an efficient method for the manufacture of cracker roller discs.

Accordingly, there is provided a cracker roller disc as described in claim 1, and a method of manufacturing a cracker roller disc as described in claim 2.

Preferred features of the invention are set out in the dependent claims attached hereto and will be described below with reference to exemplary embodiments of the invention.

By machining all of the ridges on a face of the disc blank in a single operation, suitably by turning the disc on a lathe, all of the cutting surfaces are formed together. The method is efficient as it does not require individual finishing of cutting surfaces, and it does not take longer if a greater number of cutting surfaces per disc are required.

The invention will now be described, by way of example only, with reference to the following drawings in which:
Figure 1 is a schematic view showing functional components of a forage harvester,
Figures 2 and 3 show respectively end view and perspective view of the cracker unit of Figure 1;
Figure 4 is a flow chart representation of a method according to the invention;
Figure 5 is a perspective view of a forged disc blank;
Figure 6 is a perspective view of a machined disc;
Figures 7 and 8 show respectively plan and sectional views of a forged disc blank;
Figures 9 and 10 show sectional views through the disc blank at different stages in the manufacturing process;
Figures 11, and 12 show respectively plan and half-sectional views of a finished cracker roller disc; and
Figure 13 is a sectional view through a part of the disc of Figure 11.

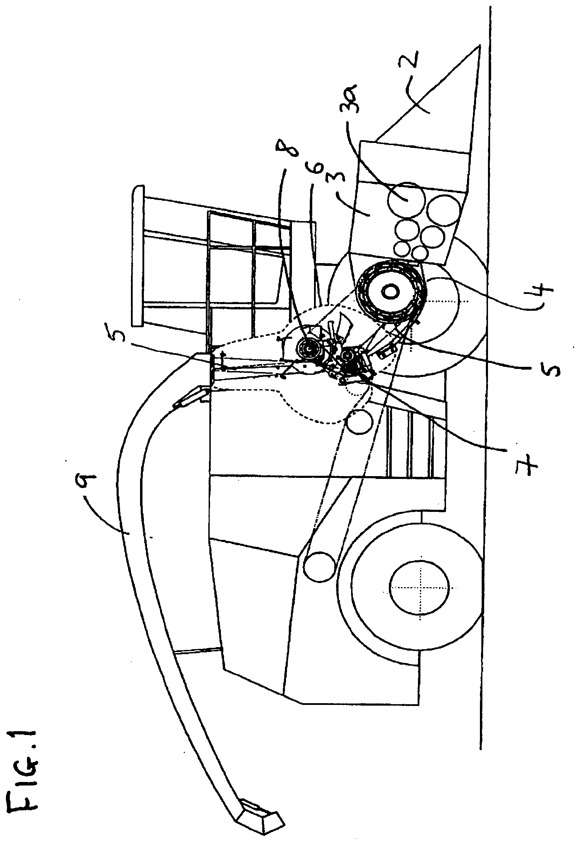

Figure 1 shows a forage harvester 1 provided with a front attachment 2 which contains cutting equipment for cutting a crop. The cut crop is fed through a series of compression rolls 3a in a compression roller housing 3 to a chopper drum 4 where the crop is chopped into smaller pieces. The chopped crop passes through duct 5 and is fed through the cracker unit 6 where the crop is further crushed and threshed. The harvested crop is then blown upwards along duct 5 by accelerator 8 and exits through spout 9. In Figure 1 the cracker unit 6 is shown in an operational position: in a non operational position, the cracker unit 6 is pivoted to the side of the duct 5 and therefore harvested crop by- passes the cracker roller assembly 7 as it moves through duct 5.

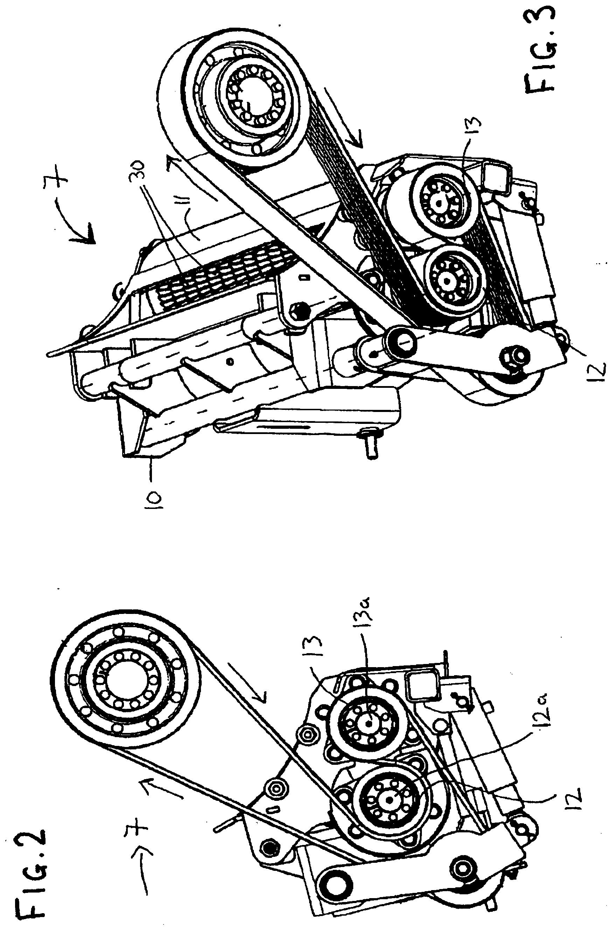

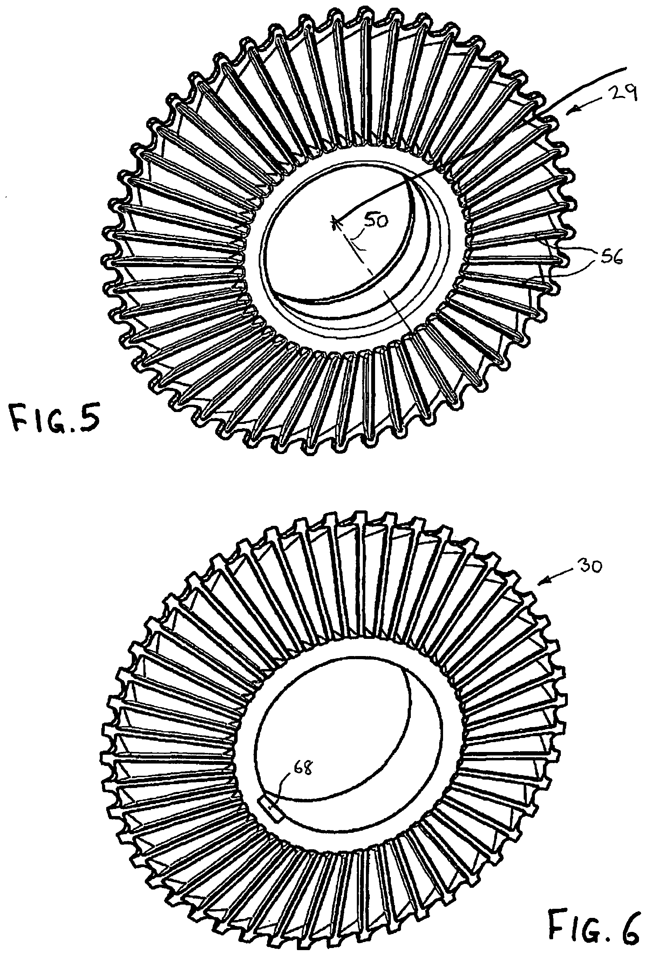

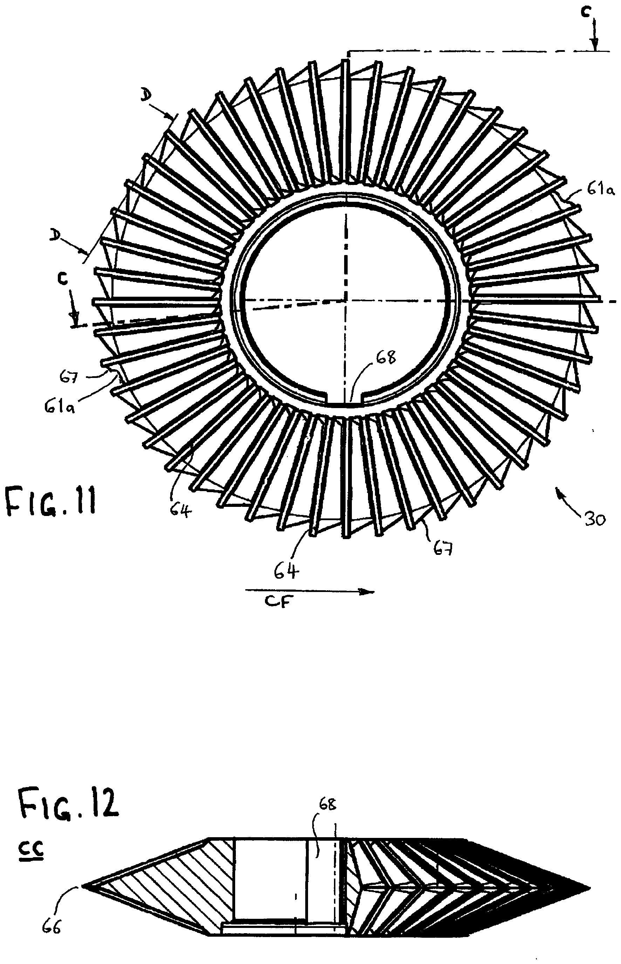

Figures 2 and 3 show a cracker roller assembly 7. The cracker roller assembly 7 comprises two frame parts 10 and 11 (not shown in Figure 2). Two cracker rollers 12 and 13, each formed from seventeen discs 30 mounted on respective roller shafts 12a, 13a, are mounted to a respective frame part 10, 11. The cracker roller discs 30 are provided with teeth for cracking/crushing the harvested crop which can be seen more clearly in Figures 6 and 11. The cracker rollers 12, 13 are mounted parallel to each other and are rotatable about their longitudinal axes. A longitudinal space between the rollers, the roller gap, allows the cut crop to pass between the rollers.

As will be understood, the dimensions of each of the discs 30, and the number of discs per roller, may be varied. One factor affecting potential variation is the characteristics of the material to be harvested.

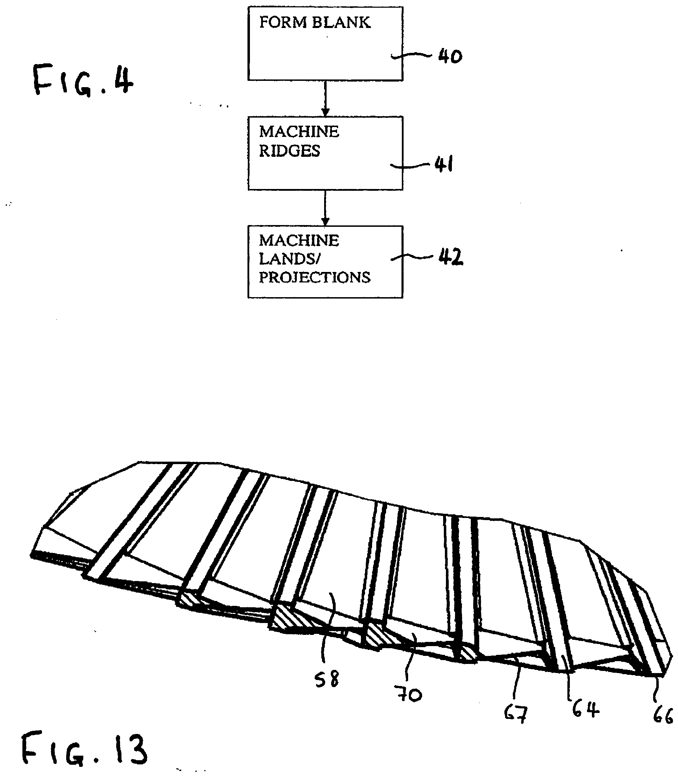

The method of manufacture of the cracker roller discs 30 may be considered as a three-stage process, as represented by Figure 4. The first stage 40 comprises forming a disc blank, the second stage 41 comprises machining of ridges on the surfaces of that blank, and the third stage 42 comprises machining of peripheral features to create further cutting edges. Each of these steps is described in more detail below.

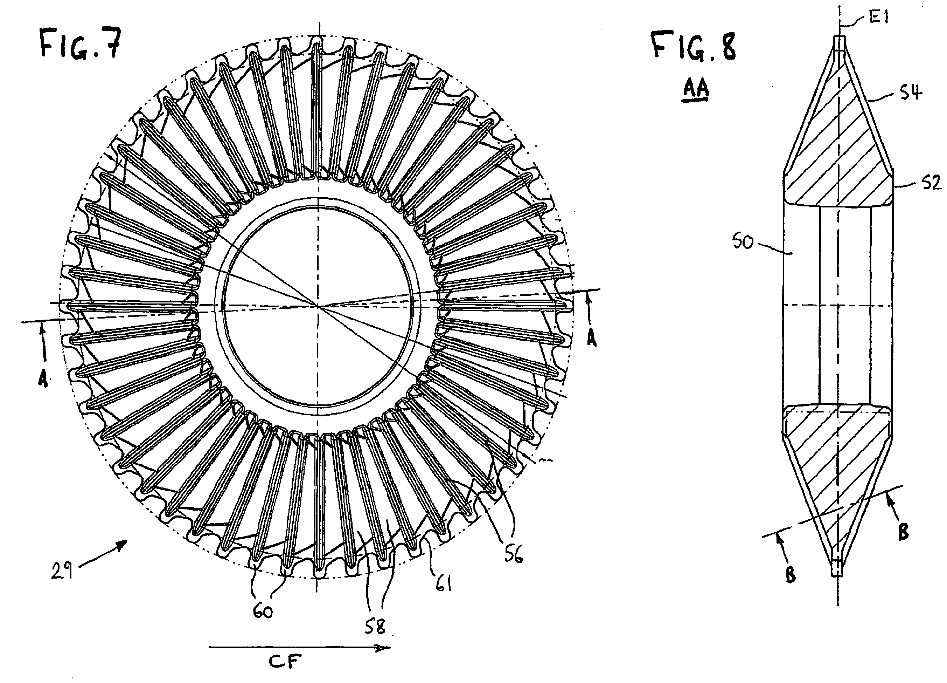

Figures 5 and 6 respectively show perspective views of the disc blank 29 and machined disc 30. Figure 7 shows the disc blank 29 in plan view, and Figure 8 is a sectional view through the disc blank taken on line AA of Figure 7. The blank has an axial bore 50 through the centre, a first portion 52 radially outward of the centre of substantially constant thickness, and a second portion 54 radially outward of the first portion which second portion tapers towards the periphery of the disc blank. A suitable taper angle is 21.8 degrees, although variation is possible as mentioned above.

The disc blank 29 is a steel body formed by forging. C45 steel is a suitable material, although other forgeable steels may be used instead. As part of the blank forming step, the forging process creates a plurality of upstanding ridges 56 extending radially outward across the second portion 54 on each face of the disc.

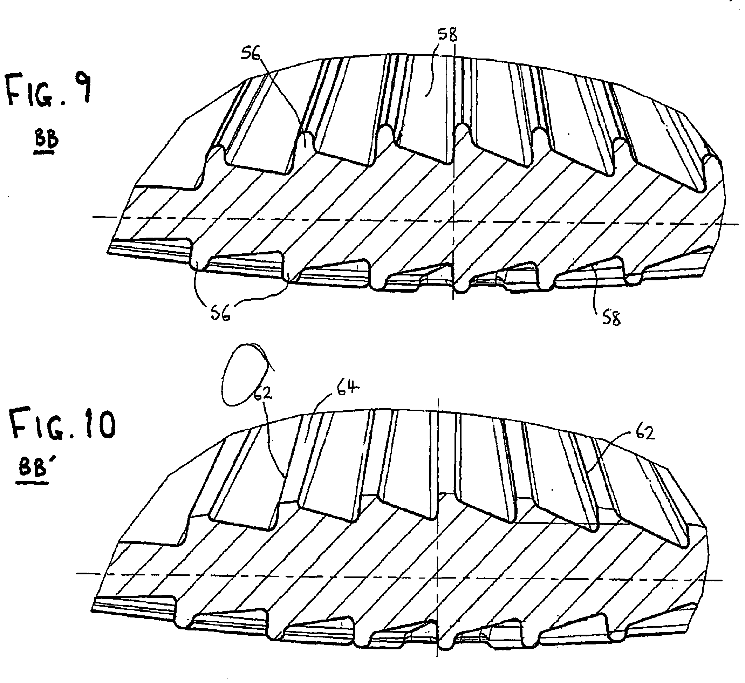

Figures 9 and 10 are sectional views through the disc blank taken on line BB in Figure 8. From Figure 9 it can be seen that the radial ridges 56 have a generally rounded profile in their upper (furthest from the disc body) portion. The lands 58, defined as the portions of disc surface between the ridges 56, are sloped from one ridge to the next to give a generally sawtooth profile. The disc blank 29 shown has 48 ridges of substantially constant width. It will be recognised that greater or fewer ridges may be provided, with the ridge height and separation being determined by the need to accommodate grain and other material of the particular crop being handled.

As can be seen from Figure 9, the step of forming (first stage 40) includes circumferentially aligning each ridge 56 on a first face of the disc blank 29 with a corresponding ridge on the opposing face of the disc blank. Furthermore, the step of forming includes aligning the distal ends of each corresponding pair of ridges 56 with radial projections 60 spaced around the periphery of the disc blank 29, as can be seen particularly in Figure 7. Adjacent radial projections 60 are connected via a contour 61 which is inclined radially inwards in the direction of crop flow (indicated by arrow CF) to give a generally sawtooth profile in the direction of crop flow.

Reverting to Figure 4, the second stage 41 of the process comprises machining each of the opposed faces of the disc blank to remove the top part of each ridge 56 and leave at least one sharp edge 62 providing a cutting edge extending along each ridge, with all ridges on a face being machined in a single operation. Additionally, this stage removes parts of the radial projections 60. The surface of the second portion 52 and the inner surface of the bore 50 may also be machined in this operation. The section view of Figure 10 shows one (upper) face of the disc having been machined to produce machined surfaces 64 and the edges 62, whilst the other (lower) face is not machined and the ridges still have the rounded profile created during the forging process. Preferably the second stage 41 is done by turning on a lathe, but may also be provided by milling in a radial direction.

Figure 11 is a plan view of the machined disc 30, Figure 12 is a half section through the disc of Figure 11 taken on line CC, and Figure 13 is a part section through the disc of Figure 11 taken on line DD . Comparing particularly Figures 7, 11 and 13, it can be seen that the third stage 42 step of machining includes removing a portion of each radial projection 60 from either side of the disc blank and creating a machined area 70 of the lands 58. The machined area 70 is provided by a milling step whereby the milling cut is made at an angle inclined to the symmetry plane E1 shown in Figure 8 so that the machined surfaces 70 of the opposing faces theoretically meet in a sharp radial inclined edge 67. Due to tolerances, this radial inclined edge 67 may be interrupted, so that contour 61 is partly present as shown in Figure 11 with line 61a. This is not deleterious to the functioning of the disc.

In the illustrated embodiment, the design of ridges 56 is such that the machined surfaces 70 are of constant width so that, in order to create them, a milling tool with one diameter need only be moved once in between the ridges 56.

As can be seen in Figures 11 to 13, the machined surfaces 64 of each ridge meet in a sharp radial edge 66. Both edges 66 and 67 assist in the cutting of crop kernels together with leaves and stalk parts that have not been cleanly cut by the chopping drum 4 (Fig. 1).

This is preferably accomplished by turning the disc blank 29 in a second stage 41 of the process on a lathe using a single cutting tool to remove the upper part of all ridges 56 and peripheral portions 60 on a first side of the disc blank in a single turning operation, before reversing the disc blank on the lathe and machining the second side. Alternatively, a milling tool could be used to be moved along the ridges 56.

The third stage 42 of the process is preferably accomplished on a milling machine. As will be recognised, it is a further particular benefit that all of the cutting edges 67 are provided by milling the machined surface 70 which extends only partly into the lands 58, so that time on the machining tool can be greatly reduced compared to prior art techniques. In the embodiment shown, third stage 42 requires one-eighth of the conventional machining time as the movement of the machining tool is only 10 mm instead of 80 mm when machining the complete land 58. Furthermore, machining the complete land 58 would require a more complex pattern of movement of the tool as the machined surface would be more of a triangular shape, preventing the machining with a larger tool in the radially inward parts of the land 58.

If the second stage 41 and third stage 42 of the process are accomplished by using a milling machine in one step (one clamping required for each side), there is still a time saving due to the partial machining of land 58 to create machined surface 70.

Furthermore, if using a lathe to carry out the second stage 41 it may be possible to effect the third stage 42 on the same machinery if the lathe is equipped with driven tools and positionable (milling) spindle.

As used herein in relation to the invention, the term "machining" means every kind of operation in which a cutting tool or the part itself is pivoted to cut contours from said part.

The process of milling may include known milling techniques, e.g.
- End/Face milling: characterised in that the tool penetrates the part along its rotational axis whereby the end face can be completely used to cut the part. In the case of stage 41, the machined surface 64 is approximately perpendicular to the rotational axis of the milling tool.
- Cylindrical or plain/peripheral milling: characterised in that the tool penetrates the part perpendicular to its rotational axis whereby the circumferential face can be completely used to cut the part. In the case of stage 41, the machined surface 64 is approximately parallel to the rotational axis of the milling tool.

Furthermore, grinding (end grinding or plain grinding) could also be used according to the procedures described for milling above, although this is not a preferred option due to the typically much higher costs involved.

Referring to the first stage 40, the above embodiment describes the disc blank as a forged part. However, it will be understood that any procedure to provide a disk blank, e.g. steel casting and hardening afterwards, may be used instead. In such a case, the second stage 41 and/or third stage 42 may require the usage of grinding. Even with such a method, the partial machining of lands 58 still results in a time saving.

Referring back to Figure 3, the present invention also provides a cracker roller 12, 13 made up of discs 30 manufactured as described above and mounted on a roller shaft 12a, 13a. To assist this, an axially extending keyway 68 is cut in the wall of the bore 50 through the disc blank: when mounted on a roller shaft 12a, 13a, a radially extending key or projection (not shown) from the shaft engages the keyway 68 to prevent the discs 30 rotating relative to the shaft.

From reading of the present disclosure, other modifications will be apparent to those skilled in the art and the scope of the invention is limited only by the following claims.

## Claims

1. A cracker roller disc, comprising a disc blank having an axial bore through the centre, a first portion radially outward of the centre of substantially constant thickness, a second portion radially outward of the first portion which second portion tapers towards the periphery of the disc blank, the disc blank further having a plurality of upstanding ridges (56) extending radially outward across the second portion on opposed faces of the disc, **characterised in that**
the ridges (56) are provided with machined surfaces (64) extending radially across the second portion and forming an edge 62 along the complete contour of the ridges (56); and
a part of the lands (58) between adjacent ridges (56) and radially inward from the periphery is not machined, and in
the disc further having an outer machined area (70) of each of the lands (58) with a sharp edge (67) extending between adjacent ridges.

2. A method of manufacturing a cracker roller disc, comprising:
in a first stage (40) forming a disc blank having an axial bore through the centre, a first portion radially outward of the centre of substantially constant thickness, a second portion radially outward of the first portion whereby the second portion tapers towards the periphery of the disc blank, the disc blank further having a plurality of upstanding ridges extending radially outward across the second portion on opposed faces of the disc; **characterised by**:
in a second stage (41) machining each of the opposed faces of the disc blank to remove the top part of each ridge and leave at least one sharp edge (64, 66) extending along each ridge, with all ridges on a face being machined in a single operation, and
a third stage (42) machining in a single operation each of the opposed faces of the disc blank to remove an outer part (70) of each land (58) between adjacent pairs of ridges and leave at least one sharp edge (67) between adjacent ridges.

3. A method as claimed in Claim 2, wherein the first stage (40) includes circumferentially aligning each ridge on a first face of the disc blank with a corresponding ridge on the opposing face of the disc blank.

4. A method as claimed in Claim 3, wherein the first stage (40) further comprises aligning the distal ends of each corresponding pair of ridges with radial projections (60) spaced around the periphery of the disc blank.

5. A method as claimed in Claim 4, wherein the second stage (41) includes removing a portion of each radial projection (60) from either side of the disc blank.

6. A method as claimed in Claim 5, wherein the machined surfaces of each radial projection (60) meet in a sharp radial edge.

7. A method as claimed in any of Claims 2 to 6, wherein the disc blank is steel and the first stage (40) comprises forging the disc blank.

8. A method as claimed in any of Claims 2 to 7, wherein the second stage (41) comprises turning the disc blank on a lathe using a single cutting tool to remove the upper part of all ridges on a first side of the disc blank in a single turning operation.

9. A method as claimed in any of Claims 2 to 7, wherein the second stage (41) comprises milling the disc blank on a milling machine using a single cutting tool to remove the upper part of all ridges on a first side of the disc blank in a single milling operation.

10. A method as claimed in any of Claims 2 to 9, wherein the third stage (42) comprises milling the disc blank on a milling machine using a single cutting tool to remove the outer part of lands (58) on a first side of the disc blank in a single milling operation.

11. A method as claimed in Claim 10, wherein the outer part of each land (58) is removed to leave a surface inclined to the symmetric plane.

12. A method as claimed in Claim 10 or Claim 11, wherein each outer part of each land (58) is removed in a single radial movement of a tool with constant diameter.

13. A method as claimed in any of Claims 2 to 12, further comprising cutting an axially extending keyway (68) in the wall of the bore through the disc blank.

14. A cracker roller comprising a plurality of discs as claimed in Claim 1, axially aligned and mounted on a common shaft.

## Patentansprüche

1. Crackerwalzenscheibe, mit einem Scheibenrohling mit einer durch die Mitte verlaufende Axialbohrung, einem radial außerhalb der Mitte liegenden ersten Abschnitt mit einer im Wesentlichen konstanten Dicke, einem radial außerhalb des ersten Abschnitts liegenden zweiten Abschnitt, der sich in Richtung des Umfangs des Scheibenrohlings verjüngt, wobei der Scheibenrohling weiterhin eine Mehrzahl aufrechter Rippen (56) aufweist, die sich über den zweiten Abschnitt radial nach außen an gegenüberliegenden Frontflächen der Scheibe erstrecken, **dadurch gekennzeichnet, dass**
die Rippen (56) mit spanend bearbeiteten Oberflächen (64) versehen sind, die sich radial über den zweiten Abschnitt erstrecken und eine Kante (62) entlang der gesamten Kontur der Rippen (56) bilden; und
ein Teil der Stege (58), die zwischen benachbarten Rippen (56) und radial innen zum Umfang liegen, nicht spanend bearbeitet ist, und
die Scheibe weiterhin eine spanend bearbeitete äußere Fläche (70) jedes der Stege (58) mit einer sich zwischen benachbarten Rippen erstreckenden scharfen Kante (67) aufweist.

2. Verfahren zum Herstellen einer Crackerwalzenscheibe, mit:
in einem ersten Schritt (40): Formen eines Scheibenrohlings mit einer durch die Mitte verlaufenden Axialbohrung, einem radial außerhalb der Mitte liegenden ersten Abschnitt mit einer im Wesentlichen konstanten Dicke, einem radial außerhalb des ersten Abschnitts liegenden zweiten Abschnitt, wodurch sich der zweite Abschnitt in Richtung des Umfangs des Scheibenrohlings verjüngt, wobei der Scheibenrohling weiterhin eine Mehrzahl aufrechter Rippen aufweist, die sich über den zweiten Abschnitt radial nach außen an gegenüberliegenden Frontflächen der Scheibe erstrecken; **gekennzeichnet durch**
in einem zweiten Schritt (41): spanendes Bearbeiten jeder der gegenüberliegenden Frontflächen des Scheibenrohlings, um den oberen Teil jeder Rippe zu entfernen und mindestens eine scharfe Kante (64, 66) zu hinterlassen, die sich entlang jeder Rippe erstreckt, wobei alle Rippen auf einer Frontfläche in einem einzigen Arbeitsablauf spanend hergestellt werden, und
in einem dritten Schritt (42): spanendes Bearbeiten jeder der gegenüberliegenden Frontflächen des Scheibenrohlings in einem einzigen Arbeitsschritt, um einen äußeren Teil (70) jedes Stegs (58) zwischen benachbarten Paaren von Rippen zu entfernen und mindestens eine scharfe Kante (67) zwischen benachbarten Rippen zu hinterlassen.

3. Verfahren nach Anspruch 2, wobei der erste Schritt (40) das Ausrichten in Umfangsrichtung jeder Rippe auf einer ersten Frontfläche des Scheibenrohlings an einer entsprechenden Rippe auf der gegenüberliegenden Frontfläche des Scheibenrohlings aufweist.

4. Verfahren nach Anspruch 3, wobei der erste Schritt (40) weiterhin das Ausrichten der distalen Enden jedes einander zugeordneten Paars von Rippen an radialen Vorsprüngen (60) aufweist, die um den Umfang des Scheibenrohlings herum beabstandet angeordnet sind.

5. Verfahren nach Anspruch 4, wobei der zweite Schritt (41) das Entfernen eines Teils jedes radialen Vorsprungs (60) von jeder der beiden Seiten des Scheibenrohlings aufweist.

6. Verfahren nach Anspruch 5, wobei sich die spanend bearbeiteten Oberflächen jedes radialen Vorsprungs (60) in einer scharfen radialen Kante treffen.

7. Verfahren nach einem der Ansprüche 2 bis 6, wobei der Scheibenrohling aus Stahl besteht und der erste Schritt (40) das Schmieden des Scheibenrohlings aufweist.

8. Verfahren nach einem der Ansprüche 2 bis 7, wobei der zweite Schritt (41) das Drehen des Scheibenrohlings auf einer Drehbank unter Verwendung eines einzigen Schneidwerkzeugs zum Entfernen des oberen Teils aller Rippen auf einer ersten Seite des Scheibenrohlings in einem einzigen Dreh-Arbeitsschritt aufweist.

9. Verfahren nach einem der Ansprüche 2 bis 7, wobei der zweite Schritt (41) das Fräsen des Scheibenrohlings auf einer Fräsmaschine unter Verwendung eines einzigen Schneidwerkzeugs zum Entfernen des oberen Teils aller Rippen auf einer ersten Seite des Scheibenrohlings in einem einzigen Fräs- Arbeitsschritt aufweist.

10. Verfahren nach einem der Ansprüche 2 bis 9, wobei der dritte Schritt (42) das Fräsen des Scheibenrohlings auf einer Fräsmaschine unter Verwendung eines einzigen Schneidwerkzeugs zum Entfernen des äußeren Teils von Stegen (58) auf einer ersten Seite des Scheibenrohlings in einem einzigen Fräs- Arbeitsschritt aufweist.

11. Verfahren nach Anspruch 10, wobei der äußere Teil jedes Stegs (58) entfernt wird, um eine Oberfläche zu hinterlassen, die in Bezug auf die Symmetrieebene geneigt ist.

12. Verfahren nach Anspruch 10 oder 11, wobei jeder äußere Abschnitt jedes Stegs (58) in einer einzigen radialen Bewegung eines Werkzeugs mit konstantem Durchmesser entfernt wird.

13. Verfahren nach einem der Ansprüche 2 bis 12, weiterhin mit dem Schneiden einer sich axial erstreckenden Keilnut (68) in der Wandung der durch den Scheibenrohling verlaufenden Bohrung.

14. Crackerwalze mit einer Mehrzahl von Scheiben nach Anspruch 1, die axial zueinander ausgerichtet und auf einer gemeinsamen Welle montiert sind.

## Revendications

1. Disque de rouleau de craqueur, comprenant une pièce brute de disque ayant un alésage axial à travers le centre, une première portion radialement vers l'extérieur du centre d'épaisseur sensiblement constante, une seconde portion radialement vers l'extérieur de la première portion, laquelle seconde portion s'effile vers la périphérie de la pièce brute de disque, la pièce brute de disque ayant en outre une pluralité d'arêtes droites (56) s'étendant radialement vers l'extérieur à travers la seconde portion sur des faces opposées du disque, **caractérisé en ce que**
les arêtes (56) sont pourvues de surfaces usinées (64) s'étendant radialement à travers la seconde portion et formant un bord (62) le long du contour complet des arêtes (56) ; et
une partie des méplats (58) entre des arêtes (56) adjacentes et radialement vers l'intérieur de la périphérie n'est pas usinée, et **en ce que**
le disque ayant en outre une zone usinée extérieure (70) de chacun des méplats (58) avec un bord vif (67) s'étendant entre des arêtes adjacentes.

2. Procédé de fabrication d'un disque de rouleau de craqueur, comprenant :
dans une première étape (40), le formage d'une pièce brute de disque ayant un alésage axial à travers le centre, une première portion radialement vers l'extérieur du centre d'épaisseur sensiblement constante, une seconde portion radialement vers l'extérieur de la première portion moyennant quoi la seconde portion s'effile vers la périphérie de la pièce brute de disque, la pièce brute de disque ayant en outre une pluralité d'arêtes droites s'étendant radialement vers l'extérieur à travers la seconde portion sur des faces opposées du disque ; **caractérisé par** :
dans une deuxième étape (41), l'usinage de chacune des faces opposées de la pièce brute de disque pour éliminer la partie supérieure de chaque arête et laisser au moins un bord vif (64, 66) s'étendant le long de chaque arête, toutes les arêtes sur une face étant usinées en une seule opération, et
dans une troisième étape (42), l'usinage en une seule opération de chacune des faces opposées de la pièce brute de disque pour éliminer une partie extérieure (70) de chaque méplat (58) entre des paires adjacentes d'arêtes et laisser au moins un bord vif (67) entre des arêtes adjacentes.

3. Procédé selon la revendication 2, dans lequel la première étape (40) comporte l'alignement circonférentiel de chaque arête sur une première face de la pièce brute de disque avec une arête correspondante sur la face opposée de la pièce brute de disque.

4. Procédé selon la revendication 3, dans lequel la première étape (40) comprend en outre l'alignement des extrémités distales de chaque paire correspondante d'arêtes avec des protubérances radiales (60) espacées autour de la périphérie de la pièce brute de disque.

5. Procédé selon la revendication 4, dans lequel la deuxième étape (41) comporte l'élimination d'une portion de chaque protubérance radiale (60) de chaque côté de l'ébauche de disque.

6. Procédé selon la revendication 5, dans lequel les surfaces usinées de chaque protubérance radiale (60) se rencontrent dans un bord radial vif.

7. Procédé selon l'une quelconque des revendications 2 à 6, dans lequel la pièce brute de disque est en acier et la première étape (40) comprend le forgeage de la pièce brute de disque.

8. Procédé selon l'une quelconque des revendications 2 à 7, dans lequel la deuxième étape (41) comprend le tournage de la pièce brute de disque sur un tour à l'aide d'un seul outil de coupe pour éliminer la partie supérieure de toutes les crêtes sur un premier côté de la pièce brute de disque en une seule opération de tournage.

9. Procédé selon l'une quelconque des revendications 2 à 7, dans lequel la deuxième étape (41) comprend le meulage de la pièce brute de disque sur une machine de meulage à l'aide d'un seul outil de coupe pour éliminer la partie supérieure de toutes les crêtes sur un premier côté de la pièce brute de disque en une seule opération de meulage.

10. Procédé selon l'une quelconque des revendications 2 à 9, dans lequel la troisième étape (42) comprend le meulage de la pièce brute de disque sur une machine de meulage à l'aide d'un seul outil de coupe pour éliminer la partie extérieure de méplats (58) sur un premier côté de la pièce brute de disque en une seule opération de meulage.

11. Procédé selon la revendication 10, dans lequel la partie extérieure de chaque méplat (58) est éliminée pour laisser une surface inclinée par rapport au plan symétrique.

12. Procédé selon la revendication 10 ou la revendication 11, dans lequel chaque partie extérieure de chaque méplat (58) est éliminée en un seul mouvement radial d'un outil avec un diamètre constant.

13. Procédé selon l'une quelconque des revendications 2 à 12, comprenant en outre la coupe d'une rainure de clavette s'étendant axialement (68) dans la paroi de l'alésage à travers la pièce brute de disque.

14. Rouleau de craqueur comprenant une pluralité de disques selon la revendication 1, alignés axialement et montés sur un arbre commun.
